# EUROPEAN PATENT SPECIFICATION

(11) **EP 4 651 726 B1**
(45) Date of publication and mention of the grant of the patent: **09.12.2026**
(21) Application number: 24701759.3
(22) Date of filing: 18.01.2024
(51) Int. Cl.: A22C 21/00

(54) **AUTOMATIC PROCESSING SYSTEM AND METHOD FOR POULTRY CARCASSES**
AUTOMATISCHES VERARBEITUNGSSYSTEM UND VERFAHREN FÜR GEFLÜGELKARKASSEN
SYSTÈME ET PROCÉDÉ DE TRAITEMENT AUTOMATIQUE DE CARCASSES DE VOLAILLE

(30) Priority: 19.01.2023 NL 2033994
(43) Date of publication of application: 26.11.2025
(73) Proprietor: Foodmate B.V., 3281 NJ Numansdorp (NL)
(72) Inventor: BEZEMER, Eelco, 3281 NJ Numansdorp (NL); BUCKO, Tadeusz Marian, 3281 NJ Numansdorp (NL); VAN WAARDENBURG, Stefan Roald, 3281 NJ Numansdorp (NL); DE KONING, Adriaan Hendrik, 3281 NJ Numansdorp (NL)
(74) Representative: V.O.
(86) International application number: PCT/NL2024/050025
(87) International publication number: WO 2024/155188

(56) References cited:
- US-A- 4 815 168
- US-A- 5 184 974
- US-B1- 6 319 110

## Description

### FIELD OF THE INVENTION

The invention relates to automatic processing systems and methods for processing poultry carcasses.

### BACKGROUND TO THE INVENTION

Processing systems and methods for processing poultry carcasses are known. Poultry carcass parts are typically conveyed through processing stations for obtaining poultry cuts from the carcass. Poultry carcass front halves, comprising the breast, are often conveyed on mandrels, whereas poultry carcass back halves, comprising the legs, are typically conveyed suspended from shackles.

US4815168A, US5184974A and US6319110B1 describes an apparates for dividing up a carcass of a slaughtered bird, suspended from its feet. The carcass is conveyed with its breast to the front in the conveyance direction, and is cut through during transport. The carcass is brought into an oblique position prior to the cutting operation.

### SUMMARY OF THE INVENTION

It is an object to propose a method and system for enabling automatic processing of a whole poultry carcass, without a need for human intervention. In a more general sense, it is an object to overcome or ameliorate at least one of the disadvantages of the prior art, or at least provide alternative processes and structures that are more effective than the prior art and which can be provided and used relatively inexpensively. At any rate the present invention is at the very least aimed at offering a useful choice and contribution to the existing art.

According to an aspect, a method as set out in claim 1 is provided for processing a poultry carcass having at least a back, a breast, and legs by an automatic poultry processing system. The method comprises conveying the carcass with a first conveyor of the automatic processing system, and holding the carcass with the first conveyor at a carcass first half while conveying the carcass with the first conveyor. The first conveyor may for example comprise a shackle for suspending the poultry carcass by the legs from the shackle. The first conveyor may for example be an overhead conveyor.

The method comprises, while conveying the carcass with a first conveyor, positioning at least a portion of a second, different, conveyor of the automatic processing system close to a carcass second half. The portion of the second conveyor can be positioned close to the carcass second half such that the portion is ready to engage the carcass second half. It is also possible that the portion engages the carcass second half. Herein, positioning the second conveyor close to the carcass second half can include engaging the carcass second half with at least the portion of the second conveyor. The positioning optionally comprises adapting a position of the second conveyor, such as by moving a portion of the second conveyor in a direction transverse to the conveyance direction of the second conveyor, from an initial position to a receiving position for receiving the carcass second half. The position of the portion of the second conveyor may for example be adapted relative to a track of the second conveyor between the initial position and the receiving position. The receiving position can be an engagement position in which the portion of the second conveyor engages the carcass second half. The second conveyor can be synchronized with the first conveyor. The second conveyor may be run in parallel proximity to the first conveyor. The first conveyor and the second conveyor may for example include a common conveyance path section at which a section of the conveyance path of the second conveyor substantially coincides with a section of the conveyance path of the first conveyor, such that, in addition to the first conveyor, the second conveyor can be positioned close to, and e.g. engage, the poultry carcass.

The method comprises, while conveying the carcass with the first conveyor and while that carcass is close to, e.g. engaged by, the second conveyor, separating the poultry carcass by the automatic processing system into the carcass first half held by the first conveyor and the carcass second half. The carcass second half may be engaged by the portion of the second conveyor prior to the separation of the carcass into the carcass first half and the carcass second half. The carcass second half positioned close to the second conveyor may be engaged by the second conveyor after separating the poultry carcass into the carcass first half and carcass second half. The carcass second half may be a carcass front half including at least the breast. The carcass first half may be a carcass back half comprising at least the legs, and optionally the hips.

The method comprises, further conveying the carcass first half, in particular away from the carcass second half, with the first conveyor, and further conveying the carcass second half, in particular away from the carcass first half, with the second conveyor. The first conveyor may for example convey the poultry carcass front half through one or more dedicated processing stations for further processing the carcass first half. The second conveyor may for example convey the poultry carcass second half through one or more dedicated processing stations for processing the carcass second half.

The method accordingly provides an automatic separation of the poultry carcass into a first half and a second half, automatically transferring the carcass second half to a separate second conveyor and conveying the carcass second half with the second conveyor for further processing. Hence, no human intervention is required for separating the poultry carcass and transferring the two carcass halves to separate conveyors or processing lines.

Optionally, the first conveyor holds the carcass by suspending the carcass by the legs, particular using one or more shackles of the first conveyor. The carcass first half may e.g. be suspended from the ankles of the carcass. While suspended by the legs, at least the portion of the second conveyor can be positioned close to, e.g. engage, the breast of the carcass, particularly using a gripper of the second conveyor. The gripper may form the portion of the second conveyor that is to be positioned close to, e.g. engage, the carcass second half. The gripper may be movable relative to a remainder of the second conveyor. The gripper may take the form of a container, such as a bowl-shaped container, for holding the carcass second half. The gripper may include two or more parts movable relative to each other for gripping the carcass second half. When the carcass second half is positioned close to the gripper, the carcass second half may be at least partially entered into the gripper, such that separation of the carcass second half from the carcass first half will cause the carcass second half to move into the gripper, e.g. by gravity. It is possible that the carcass second half is positioned in the gripper and engages the gripper prior to separation of the carcass second half from the carcass first half.

Optionally, the method comprises inserting, by the automatic processing system, a mandrel into the carcass second half engaged by, e.g. the gripper of, the second conveyor, and further conveying the carcass second half on the inserted mandrel. The mandrel may include a substantially cone-shaped body, tapering from a proximal end to a free distal end, for filling a chest cavity of the carcass second half. The mandrel may latches onto the carcass second half when inserted, for retaining the second half on the mandrel.

Optionally, the method comprises transferring the carcass second half from the second conveyor to a third conveyor, different from the first conveyor and the second conveyor, wherein third conveyor comprises the mandrel. The mandrel may for instance be used to take the carcass second half out of the gripper of the second conveyor. Hence, the second conveyor may include a first transfer section in which the carcass second half is separated from the carcass first half and transferred from the first conveyor to the second conveyor, and a second transfer section in which the separated carcass second half is transferred from the second conveyor to the third conveyor. At the second transfer section, the third conveyor may run in parallel proximity to the second conveyor, for allowing the mandrel to be inserted into the carcass second half, while being conveyed by the second conveyor. When inserted, the mandrel may engage the carcass second half. The second conveyor may subsequently release the carcass second half. The third conveyor may convey the carcass second half through one or more processing stations, for example for extracting breast meat from the carcass second half. The second conveyor may be an endless conveyor.

Optionally, the mandrel is conveyed by the third conveyor and inserted into the carcass second half by moving the portion of the second conveyor, e.g. the gripper holding the carcass second half, preferably by a predetermined fixed amount, towards the third conveyor from an initial position distal from the third conveyor to a transfer position proximate the third conveyor.

Optionally, the portion of the second conveyor is moved from the transfer position away from the third conveyor to release the carcass second half therefrom.

The method comprises determining by the automatic processing system, while conveying the carcass by the first conveyor and prior to separating the poultry carcass into the carcass first half held by the first conveyor and the carcass second half, a dimension of the carcass; and adapting a position of the second conveyor relative to the first conveyor, depending on a result of the determining. The dimension may vary between carcasses. To improve effectiveness of the method, the dimension of the carcass may be determined prior to engagement of the carcass by the second conveyor. The position of the second conveyor may be adjusted based thereon, to account for the variations in the dimension between poultry carcass.

Optionally, the determining of the dimension of the carcass comprises obtaining an image of the carcass from an image sensor, and analyzing the image to determine the dimension. The image sensor, e.g. a camera, may obtain the image of the carcass. The image may particularly be automatedly analyzed to determine the dimension. The image may for example be analyzed to determine a length and/or width of the poultry carcass or parts thereof. The image may for example be analyzed to determine a perimeter of the poultry carcass. For example, when the poultry carcass is being suspended by the legs from the first conveyor, the image may be analyzed to determine a bottom perimeter of the poultry carcass, e.g. a position of the bottom perimeter relative to the first or second conveyor.

Optionally, the determining of the dimension of the carcass comprises obtaining a three-dimensional, 3D, image of the carcass. The 3D image may e.g. be obtained using a 3D camera or a 3D line scan system. The 3D image may be obtained in a dorsal direction, i.e. looking towards the frontal plane. The dimension of the carcass may e.g. be determined by determining a distance between a cranial end of the breast of the carcass and a caudal end of the breast. The cranial end of the breast may be determined by determining from the 3D image a curvature of the outside surface of the breast of the carcass, and determining the cranial end as the position where a gradient of the outside surface away from a plane parallel to the frontal plane has a predetermined threshold value. The caudal end of the breast may be determined by determining from the 3D image a curvature of the outside surface of the breast of the carcass, and determining the caudal end as the position where a gradient of the outside surface away from a plane parallel to the frontal plane has a predetermined threshold value. The predetermined threshold value may e.g. be between 30 and 90 degrees away from a plane parallel to the frontal plane, preferably between 45 and 80 degrees, such as 55-70 degrees. The threshold value may be different for the cranial and caudal ends.

The second conveyer may be adapted, to engage the poultry carcass at the bottom perimeter. The second conveyor may include a support surface for supporting the poultry carcass, wherein the support surface is adapted to substantially align with the bottom perimeter of the poultry carcass.

Optionally, the method comprises, by the automatic processing system, moving the gripper of the second conveyor relative to a remainder of the second conveyor from an initial position to receiving position for receiving the carcass second half. The receiving position can be an engagement position in which the gripper engages the poultry carcass. The moving of the gripper from the initial position to the receiving position can comprise moving the gripper by a variable first amount being dependent on the result of the determined carcass dimension, and moving the gripper by a predetermined fixed second amount. The dimension variations between carcasses may be relatively small compared to a distance the gripper is to be moved for engaging the poultry carcass. Hence, the dimension variations may be accounted for by the variable first amount, and the fixed second amount can be primarily used for approaching the carcass with the gripper. The initial position may be predetermined. The receiving position, however, is variable as it is dependent on the carcass dimension. The gripper can for example assume an intermediate position, prior to being moved to the engagement position. The intermediate position may be variable, e.g. when first moving the gripper from the initial position by the variable first amount to the intermediate position, and subsequently moving the gripper from the intermediate position by the predetermined fixed second amount to the engagement position. Alternatively, the intermediate position may be non-variable, i.e. fixed, when first moving the gripper from the initial position by the predetermined fixed second amount, and subsequently moving the gripper from the intermediate position by the variable first amount to the engagement position. The receiving position can also be a close-to-engagement position in which the gripper is close to the carcass second half, e.g. at a predetermined distance from the carcass second half, such as 1 cm, or less.

Optionally, the variable first amount is smaller than the predetermined fixed second amount.

Optionally, the method comprises moving a separator, such as a knife or knife assembly, relative to the first conveyor based on the result of the determined carcass dimension, so as to separate the carcass into the carcass first half and the carcass second half dependent on the dimension of the carcass.

Optionally, the automatic processing system conveys the carcass first half along one or more stations of the automatic processing system where the carcass first half is processed further, in particular for harvesting one or more poultry cuts therefrom, such as drum sticks, thigs, and/or entire legs. Optionally, the automatic processing system conveys the carcass second half along one or more stations of the automatic processing system where the carcass second half is processed further, in particular for harvesting one or more poultry cuts therefrom, such as wings, wing parts, breast filets, tenders, and/or back meat.

According to an aspect, an automatic poultry processing system is provided, configured for processing a poultry carcass having at least a back, a breast, and legs in accordance with a method of any of the preceding claims.

According to a aspect is provided an automatic poultry processing system as set out in claim 7, comprising a first conveyor configured for conveying the carcass, and holding the carcass while conveying at a carcass first half. The system includes a second conveyor, e.g. synchronized to the first conveyor, and configured receiving a carcass second half. The second conveyor can be configured for positioning at least a portion thereof close to, e.g. engaging, the carcass at a carcass second half. The system includes a separation station at which the second conveyor may run in parallel proximity to the first conveyor . The separation station is configured for separating the carcass into the carcass first half, and the carcass second half while the carcass is being held and conveyed by the first conveyor and is close to, e.g. engaged by, the portion of the second conveyor. The first conveyor is further configured for conveying the separated carcass first half further, in particular away from the carcass second half, and the second conveyor is further configured for conveying the separated carcass second half further, in particular away from the carcass first half.

Optionally, the carcass first half comprises the legs and the carcass second half comprises the breast.

Optionally, the first conveyor comprises one or more shackles for suspending the carcass by the legs therefrom.

Optionally, the second conveyor comprises a gripper for receiving, e.g. engaging, the carcass second half, particularly for receiving, e.g. engaging, the breast. The gripper can form the mentioned portion of the second conveyor.

Optionally, the gripper comprises a bowl-shaped container having an open top for receiving the carcass second half therein.

Optionally, the gripper comprises a clamp member arranged for clamping the carcass second half in engagement with the gripper.

Optionally, the gripper is movably arranged relative to a remainder of the second conveyor, between an initial position and a receiving position in which the gripper receives, e.g. engages, the carcass second half.

Optionally, the receiving position of the gripper is adaptable to a dimension of the carcass.

Optionally, the gripper is movable, relative to a remainder of the second conveyor, from the initial position to the receiving position by a variable first amount being dependent on a determined dimension of the carcass, and by a predetermined fixed second amount. The gripper may for example be moved from the initial position to an intermediate position, and subsequently from the intermediate position to the receiving position. The system may be configured to first move the gripper from the initial position by the variable first amount to the intermediate position, and subsequently from the intermediate position by the predetermined fixed second amount to the receiving position, or vice versa.

The system comprises an image sensor configured for acquiring an image of the carcass, and a processing unit configured for receiving the image and determining a dimension of the carcass based on the obtained image.

Optionally, the second conveyor comprises a track and a carriage for being conveyed along the track, and wherein the system comprises an adjustment mechanism for moving the gripper relative to the carriage from the initial position to the intermediate position by the variable first amount; the adjustment mechanism comprising a follower associated with the gripper and movably connected to the carriage, and an guide arranged for engaging the follower during conveyance of the carriage along the track, the guide being adjustable relative to the track in dependence of the determined dimension of the carcass.

Optionally, the track has a distal track section, e.g. vertically, distal from the second conveyor and a proximal track section, e.g. vertically, proximate the second conveyor, and wherein the system is arranged for moving the gripper from the intermediate position to the receiving position by conveying the carriage from the distal track section to the proximal track section while maintaining a fixed position of the gripper relative to the carriage.

Optionally, the system comprises a third conveyor, e.g. synchronized with the second conveyor, comprising a mandrel, and a transfer station. At the transfer station the third conveyor may run in parallel proximity to the second conveyor. The transfer station is configured for transferring the separated carcass second half from the second conveyor to the third conveyor by inserting the mandrel into the separated carcass second half, while conveying the separated carcass second half by the second conveyor, releasing the carcass second half by the second conveyor, and further conveying the separated carcass second half on the mandrel by the third conveyor, particularly away from the second conveyor.

Optionally, the track of the second conveyor has a further distal track section, e.g. vertically, distal from the third conveyor and a further proximal track section, e.g. vertically, proximate the third conveyor, and wherein the system is arranged for moving the gripper from an initial position to a transfer position for transferring the carcass second half to the third conveyor by conveying the carriage from the further distal track section to the further proximal track section while maintaining a fixed position of the gripper relative to the carriage.

Optionally, the system is arranged for conveying the separated carcass first half along one or more stations of the automatic processing system where the carcass first half is processed further, in particular for harvesting one or more poultry cuts therefrom, and/or wherein the system is arranged for conveying the separated carcass second half along one or more stations of the automatic processing system where the carcass second half is processed further, in particular for harvesting one or more poultry cuts therefrom.

It will be appreciated that any of the aspects, features and options described herein can be combined. It will particularly be appreciated that any of the aspects, features and options described in view of the method apply equally to the system , and vice versa.

### BRIEF DESCRIPTION OF THE DRAWING

In the following detailed description, the invention will be explained using exemplary embodiments which are shown in the drawing. The drawing is schematic, thus not necessarily drawn to scale, and merely shows examples. In particular, any absolute dimensions indicated therein are merely exemplary. In the drawing, corresponding elements have been provided with corresponding reference signs. In the drawing,

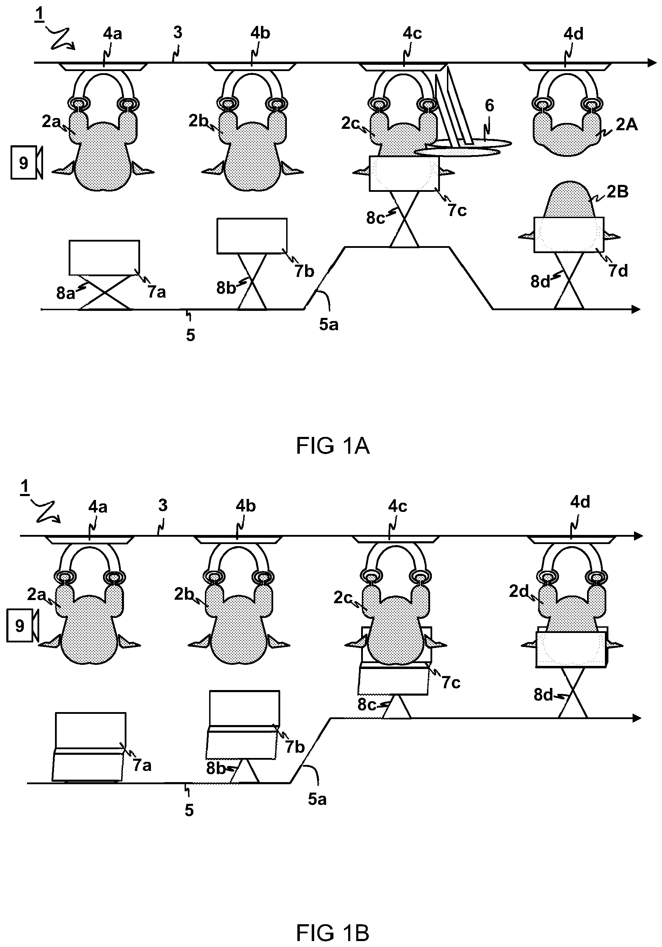

Figures 1-4 show examples of an automatic poultry processing system.

### DETAILED DESCRIPTION

Figures 1A and 1B show an automatic processing system 1 for processing a poultry carcass 2 having at least a back, a breast and legs. The system 1 comprises a first conveyor 3, here an overhead conveyor, configured to transport the poultry carcass 2 suspended therefrom by the legs, in particular suspended from one or more shackles 4a-4d of the first conveyor 3. The system 1 comprises a second conveyor 5, synchronized to the first conveyor 3. The second conveyor 5 is configured to receive, in particular be positioned close to, engage and/or support, the breast of the carcass 2, in particular while the breast depends from the legs while the legs are suspended from the first conveyor 3. Hereto, the second conveyor 5 comprises one or more grippers 7a-7d.

The system 1 comprises a separator 6 configured to separate the poultry carcass 2 into a carcass first half 2A and a carcass second half 2B. Here a carcass first half 2A corresponds to the carcass back half. More in general, here the carcass first half 2A comprises the legs. Here the carcass second half 2B corresponds to the carcass front half. More in general, here the carcass second half 2A comprises the breast. In particular the separator 6 is configured to separate the poultry carcass 2 into the carcass first half 2A and the carcass second half 2B while the poultry carcass 2 is suspended by the legs from the first conveyor 3 and received by the second conveyor 5. The separator 6 is arranged in a common conveyance path of the first conveyor 3 and the second conveyor 5. In this example, the separator 6 includes a rotating circular knife having an axis of rotation transverse to the conveyance direction of the first conveyor. Here a pair of rotating circular knives are arranged. The pair of knives rotate about parallel axis of rotation, and extend in the same, here horizontal, plane. The pair of circular rotating knives are arranged on opposite sides of the first conveyor so as to approach the poultry carcass 2 from either side.

In this example, the gripper 7a-7d forms a bowl-shaped container, particularly having an open top, for receiving the carcass second half 2B. When the gripper receives the carcass second half 2B, here, the carcass second half is positioned, at least partially, inside the gripper. Here, when the gripper 7a-7d receives the carcass, the carcass second half is engaged by the gripper. It is also possible that when the gripper receives the carcass second half, the carcass second half is at least partially positioned inside the gripper, without the gripper engaging the carcass second half. The walls of the gripper may then be positioned close to the carcass second half 2B, such that upon separation of the carcass second half 2B from the carcass first half 2A, the carcass second half will engage the gripper, and e.g. drop over a small distance, such as 1 cm or less.

The grippers 7a-7d of the second conveyor 5 are in this example adjustable between an initial position, as schematically shown for gripper 7a, to a receiving position as shown for gripper 7c. The grippers 7a-7d are in this example adjustable in a vertical direction, while being conveyed in a horizontal direction. The grippers 7a-7d are particularly adjustable relative to a track 5a of the second conveyor 5. Between the initial position as shown for gripper 7a and the receiving position as shown for gripper 7c, the grippers 7a-7d are movable to an intermediate position as shown for gripper 7b. The grippers 7a-7d are particularly movable from the initial position 7a to the intermediate position by moving the grippers 7a-7d by a variable first amount. The variable first amount depends on a dimension of the poultry carcass. Each gripper 7a-7d may hence be adjusted individually to a respective intermediate position depended on the dimension of the poultry carcass it will be associated with. Here, the variable first amount is imposed by an adjustment mechanism 8a-8d of the second conveyor 5. The grippers 7a-7d are in this example particularly adjustable from the initial position to the intermediate position by changing a, here vertical, position of the grippers 7a-7d relative to the track 5a. From the intermediate position 7b, the grippers 7a-7d are movable to the receiving position by moving the grippers 7a-7d by a predefined fixed second amount. The second amount is here imposed by a conveyance path of the second conveyor 5, here defined by the track 5a approaching the first conveyor 3. Hence, here, a relative position between the grippers 7a-7b and the track 5a does not change when adjusting the grippers 7a-7d from the intermediate position to the receiving position. Instead, the grippers 7a-7d are kept in a fixed relative position with respect to the track 5a, and conveyed along a portion of the track 5a that approaches the first conveyor 3, here from below.

The dimension of the poultry carcass 2 is determined by a sensor, in this example an image sensor 9 such as a camera. The image sensor 9 is configured for acquiring an image of the poultry carcass. Based on the image, a dimension of the poultry carcass 2 is determined, e.g. using a processor of the processing system. The dimension may for example include a size of the poultry carcass, for example a position of the lower end of the poultry carcass when suspended from the first conveyor 3. The movement of the gripper 7 from the initial position to the receiving position can accordingly be adapted.

The grippers 7a-7d may clamp the poultry carcass, particularly the breast, as schematically shown in figure 1B. The grippers 7a-7d may be movable from an open state as shown for grippers 7a-7c for receiving the poultry carcass, to a closed state as shown for gripper 7d for clamping the poultry carcass 2. The gripper 7 is moved from the open state to the closed state while in the engagement position.

While received by the gripper 7 of the second conveyor, and while suspending from the first conveyor 3, the poultry carcass is conveyed along the separator 6, and separated into the carcass first half 2A and the carcass second half 2B. The position of the separator 6, can be adjustable relative to the first conveyor and/or the second conveyor, based on the acquired dimension of the poultry carcass. Hence, the separator 6 can be aligned with the separation location on the poultry carcass 2.

Once separated, the carcass first half 2A and the carcass second half 2B are conveyed by the first conveyor 3 and second conveyor 5 respectively, and away from each other.

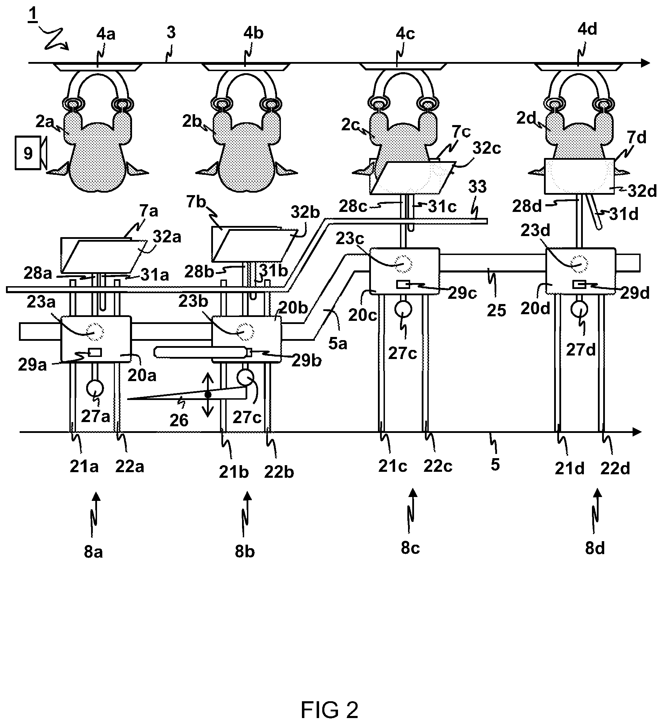

Figure 2 shows a particular example of the adjustment mechanism 8 of the system 1. Here, the adjustment mechanism 8 comprises a carriage 20, wherein the gripper 7 is supported by the carriage 20 through an adjuster bar 28. The carriage 20 is in turn supported by the second conveyor 5, here by rods 21, 22. The rods 22, 22 are fixedly mounted to the second conveyor 5. The gripper 7 is here fixedly mounted to the adjuster bar 28, and movable relative to the carriage 20 by the variable first amount from the initial position a shown for gripper 7a to the intermediate position as shown for gripper 7b. Hereto, the system 1 comprises an adjustable ramp 26, wherein a positioning of the ramp relative to the carriage 20 is adjusted based on a dimension of the poultry carcass. The ramp 26 is in this example movable transverse to the conveyance direction, here translatable in vertical direction. The ramp 26 can also be pivotable to adjust the ramp angle of the ramp 26 relative to the second conveyor 5.

The adjuster bar 28 is provided with, at an end thereof, a ramp follower wheel 27. The ramp follower wheel 27 is arranged for engaging the ramp 26, thereby adjusting a position of the gripper 7 relative to the carriage 20. Here, the follower wheel 27, and hence the adjuster bar 28, is pushed upwardly by the adjustable ramp 26, to position the gripper 7 in the carcass-dependent intermediate position. The carriage 20 is provided with a brake, operable by a brake switch 29, which brake is arranged for retaining a position of the adjuster bar 28 relative to the carriage 20. The brake is in this example normally engaged, and can be disengaged by manipulating the brake switch 29. In this example, the brake switch 29 is manipulated by means of a lateral guide 30. The lateral guide 30 is arranged parallel to the adjustable ramp 28, such that the brake is disengaged using the lateral guide 30, to allow the adjuster bar 28, and thus the gripper 7 attached thereto, to be adjust relative to the carriage 20 at a predetermined section of the second conveyor 5. The brake is reengaged after having adjusted the position of the gripper 7 in the variable intermediate position, as shown for gripper 7b.

Compared to the example of figures 1A, 1B, here the second conveyor 5 extends in a substantially horizontal plane, wherein the gripper 7 is moved by the predefined fixed second amount from the intermediate position as shown for gripper 7b to the receiving position as shown for gripper 7c by means of a cam track 25 and associated cam 23. The cam is mounted to the carriage 20 and follows the cam track 25. Here, the gripper 7 is moved the fixed second amount after having moved the gripper 7 by the variable first amount, but it will be appreciated that the opposite order can also be applied. Hence, here, the position of the gripper 7 relative to the carriage 20 has been adjusted by the variable first amount, and is fixed due the reengaging of the brake. The carriage 20 is subsequently moved, by means of the cam 23 following the cam track 25, towards the poultry carcass by the fixed second amount, thereby entraining the gripper 7 to the receiving position. The rods 21, 22 are here slidingly supporting the carriage 20 to allow the carriage 20 to move relative to the conveyor 5.Similar to the example of figure 1B, the example of figure 2 shows the gripper 7 to be movable between an open state as shown for grippers 7a, 7b, 7c and a closed state as shown for gripper 7d. Hence, the poultry carcass 2 can be clamped by the gripper. Figure 2 shows an example of an actuation mechanism for moving the gripper between the open and the closed state. Hereto, the gripper 7 is provided with an actuation handle 31 that is fixedly mounted to a side wall 32 of the gripper 7. The movable side wall 32 is in this example pivotably arranged relative to a remainder of the gripper 7 here about a horizontal pivot axis, here extending in the conveyance direction. The actuation handle 31 cooperates with an actuation guide 33 of the system 1 for moving the gripper between the open and closed state. The actuation guide 33 extends generally in the conveyance direction, particularly parallel to the cam track 25 for guiding the carriage 20. The movable side wall 32 of the gripper 7 is in this example spring biased towards the closed state. While conveying the carriage 20 with the second conveyor 5, the actuation guide 33 catches the actuation handle 31 and guides the actuation handle 31 so as pivot the movable side wall 32 to the open state against the biasing spring force. In particular, in this example the actuation handle 31 is pivoted by the actuation guide 33 so that the actuation handle 31 assumes a vertical orientation to facilitate the adjustment of the gripper 7 position by the first and second amounts. After the gripper 7 has received the poultry carcass 2, the actuation guide 33 releases the actuation handle 31 such that the movable side wall 32 is returned to the closed state by a spring force. The poultry carcass can accordingly be clamped by the gripper 7 under influence of the spring force.

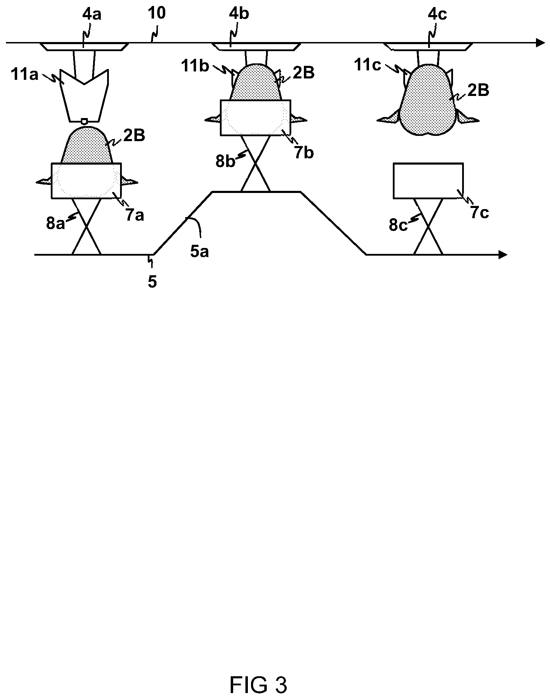

Figure 3 shows an example of the processing system 1, comprising a third conveyor 10. The third conveyor 10, here, comprises one or more mandrels 11a-11c for being inserted into the carcass second half 2B. The third conveyor 10 is hereto in this example synchronized with the second conveyor 5 along a common conveyance path. While conveying the carcass second half 2B with the second conveyor, the mandrel 11 is inserted into the carcass second half 2B. When inserted, the mandrel 11 latches onto the poultry carcass second half 2B. The second conveyor 5 subsequently releases the carcass second half 2B, such that the carcass second half 2B is conveyed further on the mandrel 11 by the third conveyor 10.

The carcass second halves 2B in this example pushed over the mandrels 11a-11c by moving the grippers 7a-7c, each holding a respective carcass second half 2B towards the third conveyor 10 from an initial position as shown for gripper 7a to a transfer position as shown for gripper 7b in which the mandrels 11a-11c respectively insert into the carcass second halves 2B. Here, the grippers 7a-7c are moved towards the third conveyor 10 by a predetermine fixed amount imposed by the track 5a of the second conveyor 5 approaching the third conveyor 10. The grippers 7a-7c are hence, in this example, not adjusted relative to the track 5a of the second conveyor 5. The position of the grippers 7a-7c relative to the track 5a optionally corresponds to the intermediate position as adjusted prior to receiving the carcass second half 2B upon separation of the carcass.

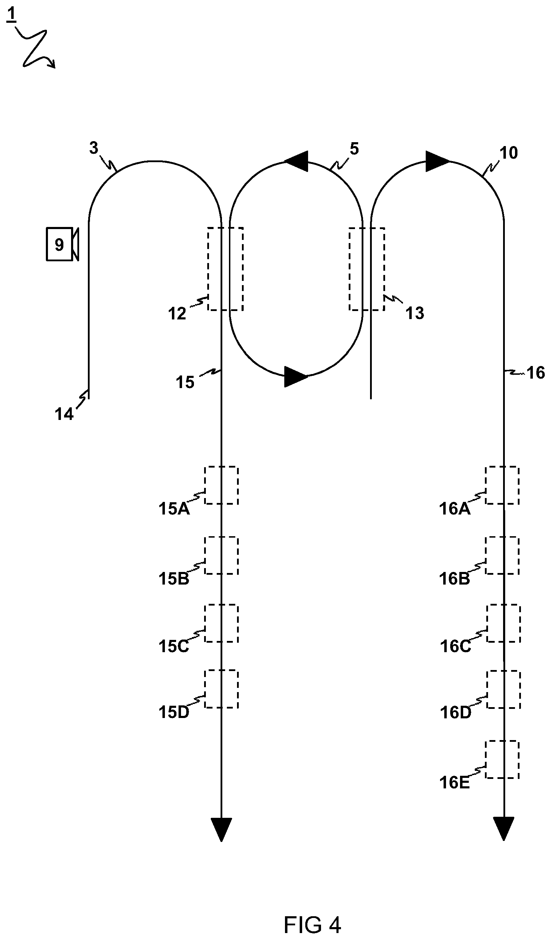

Figure 4 shows a schematic top view of the processing system 1, comprising the first conveyor 3, the second conveyor 5 and the third conveyor 10. The second conveyor 5 is here an endless conveyor. The first conveyor 3 and/or the third conveyor 10 may also be an endless conveyor. The second conveyor 5 interfaces with the first conveyor 3 at a separation section 12. The separation section here particularly corresponds to the arrangement as shown in figures 1A and 1B and figure 2. The second conveyor 5 furthermore interfaces with the third conveyor 10 at a transfer section 13. The transfer section 13 here particularly corresponds to the arrangement shown in figure 2. The processing system 1 accordingly includes a single infeed line 14 by which a poultry carcass is fed in, and two outfeed lines 15, 16 by which, respectively carcass first halves and carcass second halves are fed out. The infeed line 14 and one of the outfeed lines 15 is, here, formed by the first conveyor 3. The other outfeed line 16 is formed, here, by the third conveyor 10.

The processing system 1 can further be arranged for conveying the separated carcass first half 2A along one or more stations, in particular for harvesting one or more poultry cuts therefrom, and/or arranged for conveying the separated carcass second half 2B along one or more stations, in particular for harvesting one or more poultry cuts therefrom. In the example of Fig. 4, the first outfeed line 15 feeds the carcass first halves 2A past a hip cutter 15A, a thigh meat harvester 15B, a thigh bone cutter 15C and a drumstick harvester 15D. In the example of Fig. 4, the second outfeed line 16 feeds the carcass second halves 2B past a wing cutter 16A, a skin cutter 16B, a deskinner 16C, a breast filet harvester 16D, and in inner filet harvester 16E.

Herein, the invention is described with reference to specific examples of embodiments of the invention. It will, however, be evident that various modifications and changes may be made therein, without departing from the scope of the invention as set out in the appended claims.

For the purpose of clarity and a concise description features are described herein as part of the same or separate embodiments, however, alternative embodiments having combinations of all or some of the features described in these separate embodiments are also envisaged.

However, other modifications, variations, and alternatives are also possible. The specifications, drawings and examples are, accordingly, to be regarded in an illustrative sense rather than in a restrictive sense.

For the purpose of clarity and a concise description features are described herein as part of the same or separate embodiments, however, it will be appreciated that the scope of the invention may include embodiments having combinations of all or some of the features described.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method of processing a poultry carcass (2) having at least a back, a breast, and legs by an automatic poultry processing system (1), comprising:
conveying the carcass with a first conveyor (3) of the automatic processing system (1), and holding the carcass (2) with the first conveyor (3) at a carcass first half (2A) while conveying the carcass with the first conveyor (3);
while conveying the carcass with a first conveyor (3), positioning at least a portion of a second, different, conveyor (5) of the automatic processing system (1) close to a carcass second half (2B);
while conveying the carcass (2) with the first conveyor (3) and while the carcass (2) is close to the portion of the second conveyor (2A), separating the poultry carcass by the automatic processing system (1) into the carcass first half (2A) held by the first conveyor (3) and the carcass second half (2B; and
further conveying the carcass first half (2A), in particular away from the carcass second half (2B), with the first conveyor (3), and further conveying the carcass second half (2B), in particular away from the carcass first half (2A), with the second conveyor (5);
**characterised in that** the method comprises determining by the automatic processing system (1), while conveying the carcass (2) by the first conveyor (3) and prior to separating the poultry carcass (2) into the carcass first half (2A) held by the first conveyor (3) and the carcass second half (2B), a dimension of the carcass (2); and
adapting a position of the portion of the second conveyor (5) relative to the first conveyor (3), depending on a result of the determining.

2. The method according to claim 1, wherein the carcass first half (2A) comprises the legs and the carcass second half (2B) comprises the breast, and wherein the first conveyor (3) holds the carcass (2) by suspending the carcass (2) by the legs, particular using one or more shackles (4a-4d) of the first conveyor (3), and while suspended by the legs, at least the portion of the second conveyor (5) is positioned close to the breast of the carcass (2).

3. Method according to any of the preceding claims, comprising inserting, by the automatic processing system (1), a mandrel (11a-11c) into the carcass second half (2B) engaged by the second conveyor (5), and further conveying the carcass second half (2B) on the inserted mandrel (11a-11c).

4. Method according to claim 3, comprising transferring the carcass second half (2B) to a third conveyor (10), different from the first conveyor (3) and the second conveyor (5), wherein third conveyor (10) comprises the mandrel (11a-11c).

5. The method according to any of the preceding claims, wherein the determining of the dimension of the carcass comprises obtaining an image of the carcass from an image sensor (9), and analyzing the image to determine the dimension.

6. The method according to any of the preceding claims, wherein the moving of a gripper (7a-7c) of the second conveyor (5) from the initial position to the engagement position comprises
moving the gripper (7a-7c) by a variable first amount being dependent on the result of the determined carcass dimension, and
moving the gripper (7a-7c) by a predetermined fixed second amount.

7. An automatic poultry processing system (1), comprising
a first conveyor (3) configured for conveying a carcass (2), and holding the carcass while engaging at a carcass first half (2A) of the carcass;
a second conveyor (5) configured for positioning at least a portion thereof close to a carcass second half (2B) of the carcass (2);
a separation station (6) configured for separating the carcass (2) into the carcass first half (2A), and the carcass second half (2B) while the carcass is being held and conveyed by the first conveyor (3) and is close to the portion of the second conveyor (5); and
wherein the first conveyor (3) is further configured for conveying the separated carcass first half (2A) further, in particular away from the carcass second half (2B), and the second conveyor (5) is further configured for conveying the separated carcass second half (2B) further, in particular away from the carcass first half (2A), **characterised in that** the automatic poultry processing system (1) further comprises an image sensor (9) configured for acquiring an image of the carcass, and a processing unit configured for receiving the image and determining a dimension of the carcass based on the obtained image; wherein the automatic poultry processing system (1) is configured for adapting a position of the portion of the second conveyor (5) relative to the first conveyor (3), depending on a result of the determining.

8. The system according to claim 7, wherein the carcass first half (2A) comprises the legs and the carcass second half comprises the breast, and wherein the first conveyor (3) comprises one or more shackles (4a-4d) for suspending therefrom the carcass by the legs.

9. The system according to claim 7 or 8, wherein the second conveyor (5) comprises a gripper (7a-7d) for receiving, e.g. engaging, the carcass second half, particularly the breast, wherein the gripper (7a-7d) comprises a bowl-shaped container having an open top for receiving the carcass second half therein.

10. The system according to claim 9, wherein the gripper (7a-7d) comprises a clamp member arranged for clamping the carcass second half in engagement with the gripper.

11. The system according to claim 9 or 10, wherein the gripper (7a-7d) is movably arranged relative to a remainder of the second conveyor, between an initial position and an receiving position in which the gripper receives, e.g. engages, the carcass second half.

12. The system according to claim 11, wherein the second position of the gripper is adaptable to a dimension of the carcass.

13. The system according to claim 11 or 12, wherein the gripper (7a-7d) is movable, relative to the remainder of the second conveyor, by a variable first amount being dependent on a determined dimension of the carcass from the initial position to an intermediate position, and by a predetermined fixed second amount, from the intermediate position to the receiving position in which the gripper is close to, e.g. engages, the carcass, or vice versa.

14. The system according to any of claims 7-13, comprising
a third conveyor (10) comprising a mandrel (11a-11c), and
a transfer station configured for transferring the separated carcass second half from the second conveyor to the third conveyor by inserting the mandrel into the separated carcass second half, while conveying the separated carcass second half by the second conveyor, releasing the carcass second half by the second conveyor, and further conveying the separated carcass second half on the mandrel by the third conveyor, particularly away from the second conveyor.

15. The system according to any of claims 7-14, arranged for conveying the separated carcass first half along one or more stations of the automatic processing system where the carcass first half is processed further, in particular for harvesting one or more poultry cuts therefrom, and/or arranged for conveying the separated carcass second half along one or more stations of the automatic processing system where the carcass second half is processed further, in particular for harvesting one or more poultry cuts therefrom.

## Patentansprüche

1. Verfahren zum Verarbeiten eines Geflügelschlachtkörpers (2) mit zumindest einem Rücken, einer Brust und Beinen durch ein automatisches Geflügelverarbeitungssystem (1), umfassend:
Fördern des Schlachtkörpers mit einem ersten Förderer (3) des automatischen Verarbeitungssystems (1) und Halten des Schlachtkörpers (2) mit dem ersten Förderer (3) an einer ersten Schlachtkörperhälfte (2A), während der Schlachtkörper mit dem ersten Förderer (3) gefördert wird;
während des Förderns des Schlachtkörpers mit dem ersten Förderer (3), Positionieren zumindest eines Abschnitts eines zweiten, anderen Förderers (5) des automatischen Verarbeitungssystems (1) nahe einer zweiten Schlachtkörperhälfte (2B);
während des Förderns des Schlachtkörpers (2) mit dem ersten Förderer (3) und während sich der Schlachtkörper (2) nahe dem Abschnitt des zweiten Förderers (5) befindet, Trennen des Geflügelschlachtkörpers durch das automatische Verarbeitungssystem (1) in die von dem ersten Förderer (3) gehaltene erste Schlachtkörperhälfte (2A) und die zweite Schlachtkörperhälfte (2B); und
Weiterfördern der ersten Schlachtkörperhälfte (2A), insbesondere von der zweiten Schlachtkörperhälfte (2B) weg, mit dem ersten Förderer (3), und Weiterfördern der zweiten Schlachtkörperhälfte (2B), insbesondere von der ersten Schlachtkörperhälfte (2A) weg, mit dem zweiten Förderer (5);
**dadurch gekennzeichnet, dass** das Verfahren, während der Schlachtkörper (2) durch den ersten Förderer (3) gefördert wird und vor dem Trennen des Geflügelschlachtkörpers (2) in die von dem ersten Förderer (3) gehaltene erste Schlachtkörperhälfte (2A) und die zweite Schlachtkörperhälfte (2B), ein Bestimmen einer Abmessung des Schlachtkörpers (2) durch das automatische Verarbeitungssystem (1) umfasst; und
eine Position des Abschnitts des zweiten Förderers (5) relativ zu dem ersten Förderer (3) in Abhängigkeit von einem Ergebnis des Bestimmens angepasst wird.

2. Verfahren nach Anspruch 1, wobei die erste Schlachtkörperhälfte (2A) die Beine aufweist und die zweite Schlachtkörperhälfte (2B) die Brust aufweist, und wobei der erste Förderer (3) den Schlachtkörper (2) hält, indem er den Schlachtkörper (2) an den Beinen aufhängt, insbesondere unter Verwendung eines oder mehrerer Bügel (4a-4d) des ersten Förderers (3), und wobei, während der Schlachtkörper an den Beinen aufgehängt ist, zumindest der Abschnitt des zweiten Förderers (5) nahe der Brust des Schlachtkörpers (2) positioniert wird.

3. Verfahren nach einem der vorhergehenden Ansprüche, umfassend ein Einführen eines Dorns (11a-11c) durch das automatische Verarbeitungssystem (1) in die von dem zweiten Förderer (5) erfasste zweite Schlachtkörperhälfte (2B) und ein Weiterfördern der zweiten Schlachtkörperhälfte (2B) auf dem eingeführten Dorn (11a-11c).

4. Verfahren nach Anspruch 3, umfassend ein Überführen der zweiten Schlachtkörperhälfte (2B) zu einem dritten Förderer (10), der sich von dem ersten Förderer (3) und dem zweiten Förderer (5) unterscheidet, wobei der dritte Förderer (10) den Dorn (11a-11c) aufweist.

5. Verfahren nach einem der vorhergehenden Ansprüche, wobei das Bestimmen der Abmessung des Schlachtkörpers ein Erhalten eines Bildes des Schlachtkörpers von einem Bildsensor (9) und ein Analysieren des Bildes zum Bestimmen der Abmessung umfasst.

6. Verfahren nach einem der vorhergehenden Ansprüche, wobei das Bewegen eines Greifers (7a-7c) des zweiten Förderers (5) von der Ausgangsposition in die Eingriffsposition Folgendes umfasst:
Bewegen des Greifers (7a-7c) um einen variablen ersten Betrag, der von dem Ergebnis der bestimmten Schlachtkörperabmessung abhängig ist, und
Bewegen des Greifers (7a-7c) um einen vorbestimmten festen zweiten Betrag.

7. Automatisches Geflügelverarbeitungssystem (1), umfassend
einen ersten Förderer (3), der zum Fördern eines Schlachtkörpers (2) und zum Halten des Schlachtkörpers, während er an einer ersten Schlachtkörperhälfte (2A) des Schlachtkörpers angreift, konfiguriert ist;
einen zweiten Förderer (5), der zum Positionieren zumindest eines Abschnitts desselben nahe einer zweiten Schlachtkörperhälfte (2B) des Schlachtkörpers (2) konfiguriert ist;
eine Trennstation (6), die zum Trennen des Schlachtkörpers (2) in die erste Schlachtkörperhälfte (2A) und die zweite Schlachtkörperhälfte (2B) konfiguriert ist, während der Schlachtkörper von dem ersten Förderer (3) gehalten und gefördert wird und sich nahe dem Abschnitt des zweiten Förderers (5) befindet; und
wobei der erste Förderer (3) ferner zum Weiterfördern der getrennten ersten Schlachtkörperhälfte (2A), insbesondere von der zweiten Schlachtkörperhälfte (2B) weg, konfiguriert ist und der zweite Förderer (5) ferner zum Weiterfördern der getrennten zweiten Schlachtkörperhälfte (2B), insbesondere von der ersten Schlachtkörperhälfte (2A) weg, konfiguriert ist, **dadurch gekennzeichnet, dass** das automatische Geflügelverarbeitungssystem (1) ferner einen Bildsensor (9), der zum Erfassen eines Bildes des Schlachtkörpers konfiguriert ist, und eine Verarbeitungseinheit, die zum Empfangen des Bildes und zum Bestimmen einer Abmessung des Schlachtkörpers auf Grundlage des erhaltenen Bildes konfiguriert ist, aufweist; wobei das automatische Geflügelverarbeitungssystem (1) zum Anpassen einer Position des Abschnitts des zweiten Förderers (5) relativ zu dem ersten Förderer (3) in Abhängigkeit von dem Ergebnis des Bestimmens konfiguriert ist.

8. System nach Anspruch 7, wobei die erste Schlachtkörperhälfte (2A) die Beine aufweist und die zweite Schlachtkörperhälfte die Brust aufweist und wobei der erste Förderer (3) einen oder mehrere Bügel (4a-4d) zum Aufhängen des Schlachtkörpers an den Beinen daran aufweist.

9. System nach Anspruch 7 oder 8, wobei der zweite Förderer (5) einen Greifer (7a-7d) zum Aufnehmen, z. B. Erfassen, der zweiten Schlachtkörperhälfte, insbesondere der Brust, aufweist, wobei der Greifer (7a-7d) einen schalenförmigen Behälter mit einer offenen Oberseite zum Aufnehmen der zweiten Schlachtkörperhälfte darin aufweist.

10. System nach Anspruch 9, wobei der Greifer (7a-7d) ein Klemmelement aufweist, das zum Festklemmen der zweiten Schlachtkörperhälfte in Eingriff mit dem Greifer angeordnet ist.

11. System nach Anspruch 9 oder 10, wobei der Greifer (7a-7d) relativ zu einem übrigen Teil des zweiten Förderers zwischen einer Ausgangsposition und einer Aufnahmeposition, in der der Greifer die zweite Schlachtkörperhälfte aufnimmt, z. B. erfasst, beweglich angeordnet ist.

12. System nach Anspruch 11, wobei die zweite Position des Greifers an eine Abmessung des Schlachtkörpers anpassbar ist.

13. System nach Anspruch 11 oder 12, wobei der Greifer (7a-7d) relativ zu dem übrigen Teil des zweiten Förderers um einen variablen ersten Betrag, der von einer bestimmten Abmessung des Schlachtkörpers abhängig ist, von der Ausgangsposition in eine Zwischenposition und um einen vorbestimmten festen zweiten Betrag von der Zwischenposition in die Aufnahmeposition, in der sich der Greifer nahe dem Schlachtkörper befindet, z. B. diesen erfasst, oder umgekehrt bewegbar ist.

14. System nach einem der Ansprüche 7-13, umfassend
einen dritten Förderer (10), der einen Dorn (11a-11c) aufweist, und
eine Überführungsstation, die zum Überführen der getrennten zweiten Schlachtkörperhälfte von dem zweiten Förderer zu dem dritten Förderer konfiguriert ist, indem der Dorn in die getrennte zweite Schlachtkörperhälfte eingeführt wird, während die getrennte zweite Schlachtkörperhälfte durch den zweiten Förderer gefördert wird, die zweite Schlachtkörperhälfte durch den zweiten Förderer freigegeben wird und die getrennte zweite Schlachtkörperhälfte auf dem Dorn durch den dritten Förderer, insbesondere von dem zweiten Förderer weg, weitergefördert wird.

15. System nach einem der Ansprüche 7-14, das zum Fördern der getrennten ersten Schlachtkörperhälfte entlang einer oder mehrerer Stationen des automatischen Verarbeitungssystems, an denen die erste Schlachtkörperhälfte weiterverarbeitet wird, insbesondere zum Gewinnen eines oder mehrerer Geflügelteilstücke daraus, angeordnet ist und/oder zum Fördern der getrennten zweiten Schlachtkörperhälfte entlang einer oder mehrerer Stationen des automatischen Verarbeitungssystems, an denen die zweite Schlachtkörperhälfte weiterverarbeitet wird, insbesondere zum Gewinnen eines oder mehrerer Geflügelteilstücke daraus, angeordnet ist.

## Revendications

1. Procédé de traitement d'une carcasse (2) de volaille ayant au moins un dos, une poitrine et des pattes par un système de traitement automatique (1) de volaille, comprenant les étapes suivantes :
un premier transporteur (3) du système de traitement automatique (1) transporte la carcasse, et le premier transporteur (3) maintient la carcasse (2) par une première moitié de carcasse (2A) lors du transport de la carcasse ;
lors du transport de la carcasse par [le] premier transporteur (3), au moins une partie d'un autre deuxième transporteur (5) du système de traitement automatique (1) est positionnée près d'une deuxième moitié de carcasse (2B) ;
lors du transport de la carcasse (2) par le premier transporteur (3), et lorsque la carcasse (2) se trouve près de la partie du deuxième transporteur [(5)], le système de traitement automatique (1) sépare la carcasse de volaille en la première moitié de carcasse (2A) maintenue par le premier transporteur (3) et la deuxième moitié de carcasse (2B), et
le premier transporteur (3) transporte plus loin la première moitié de carcasse (2A), plus précisément à l'écart de la deuxième moitié de carcasse (2B), et le deuxième transporteur (5) transporte plus loin la deuxième moitié de carcasse (2B), plus précisément à l'écart de la première moitié de carcasse (2A) ;
**caractérisé en ce que**
lors du transport de la carcasse (2) par le premier transporteur (3) et avant la séparation de la carcasse (2) de volaille en la première moitié de carcasse (2A) maintenue par le premier transporteur (3) et la deuxième moitié de carcasse (2B), le procédé comprend la détermination par le système de traitement automatique (1) de dimensions de la carcasse (2) ; et
l'adaptation d'une position de la partie du deuxième transporteur (5) par rapport au premier transporteur (3) en fonction d'un résultat de la détermination.

2. Procédé selon la revendication 1, dans lequel la première moitié de carcasse (2A) comprend les pattes, et la deuxième moitié de carcasse (2B) comprend la poitrine, et dans lequel le premier transporteur (3) maintient la carcasse (2) en suspendant la carcasse (2) par les pattes, plus précisément à l'aide d'une ou plusieurs manilles (4a-4d) du premier transporteur (3), et lors de la suspension par les pattes, au moins la partie du deuxième transporteur (5) est positionnée près de la poitrine de la carcasse (2).

3. Procédé selon l'une des revendications précédentes, comprenant l'insertion par le système de traitement automatique (1) d'un mandrin (11a -11c) dans la deuxième moitié de carcasse (2B) retenue par le deuxième transporteur (5), et le transport plus loin de la deuxième moitié de carcasse (2B) sur le mandrin (11a -11c) inséré.

4. Procédé selon la revendication 3, comprenant le passage de la deuxième moitié de carcasse (2B) à un troisième transporteur (10) différent du premier transporteur (3) et du deuxième transporteur (5), dans lequel le troisième transporteur (10) comprend le mandrin (11a -11c).

5. Procédé selon l'une des revendications précédentes, dans lequel la détermination des dimensions de la carcasse comprend l'obtention d'une image de la carcasse à partir d'un capteur d'images (9), et l'analyse de l'image pour déterminer les dimensions.

6. Procédé selon l'une des revendications précédentes, dans lequel le déplacement d'un dispositif de préhension (7a-7c) du deuxième transporteur (5) de la position initiale à la position de retenue comprend
le déplacement du dispositif de préhension (7a-7c) d'une première quantité variable dépendant du résultat des dimensions de carcasse déterminées, et
le déplacement du dispositif de préhension (7a-7c) d'une deuxième quantité fixe prédéterminée.

7. Système de traitement automatique (1) de volaille, comprenant
un premier transporteur (3) configuré pour transporter une carcasse (2) et maintenir la carcasse tout en retenant une première moitié de carcasse (2A) de la carcasse ;
un deuxième transporteur (5) configuré pour positionner au moins une partie de celui-ci près d'une deuxième moitié de carcasse (2B) de la carcasse (2) ;
un poste de séparation (6) configuré pour séparer la carcasse (2) en la première moitié de carcasse (2A) et la deuxième moitié de carcasse (2B) lors du maintien et du transport de la carcasse par le premier transporteur (3) et lorsque celle-ci se trouve près de la partie du deuxième transporteur (5) ; et
dans lequel le premier transporteur (3) est en outre configuré pour transporter plus loin la première moitié de carcasse (2A) séparée, plus précisément à l'écart de la deuxième moitié de carcasse (2B), et le deuxième transporteur (5) est en outre configuré pour transporter plus loin la deuxième moitié de carcasse (2B) séparée, plus précisément à l'écart de la première moitié de carcasse (2A), **caractérisé en ce que** le système de traitement automatique (1) de volaille comprend en outre un capteur d'images (9) configuré pour acquérir une image de la carcasse, et une unité de traitement configurée pour recevoir l'image et déterminer des dimensions de la carcasse sur la base de l'image obtenue ; dans lequel le système de traitement automatique (1) de volaille est configuré pour adapter une position de la partie du deuxième transporteur (5) par rapport au premier transporteur (3) en fonction du résultat de la détermination.

8. Système selon la revendication 7, dans lequel la première moitié de carcasse (2A) comprend les pattes, et la deuxième moitié de carcasse comprend la poitrine, et dans lequel le premier transporteur (3) comprend une ou plusieurs manilles (4a-4d) destinées à suspendre la carcasse par les pattes.

9. Système selon la revendication 7 ou 8, dans lequel le deuxième transporteur (5) comprend un dispositif de préhension (7a-7d) destiné à recevoir, par exemple à retenir, la deuxième moitié de carcasse, plus précisément la poitrine, dans lequel le dispositif de préhension (7a-7d) comprend un récipient en forme de cuvette dont le dessus est ouvert pour recevoir la deuxième moitié de carcasse à l'intérieur.

10. Système selon la revendication 9, dans lequel le dispositif de préhension (7a-7d) comprend un élément de serrage agencé pour serrer la deuxième moitié de carcasse retenue par le dispositif de préhension.

11. Système selon la revendication 9 ou 10, dans lequel le dispositif de préhension (7a-7d) est agencé de manière mobile par rapport au reste du deuxième transporteur entre une position initiale et une position de réception dans laquelle le dispositif de préhension reçoit, par exemple retient, la deuxième moitié de carcasse.

12. Système selon la revendication 11, dans lequel la deuxième position du dispositif de préhension est adaptable à des dimensions de la carcasse.

13. Système selon la revendication 11 ou 12, dans lequel le dispositif de préhension (7a-7d) est mobile par rapport au reste du deuxième transporteur d'une première quantité variable dépendant des dimensions déterminées de la carcasse entre la position initiale et une position intermédiaire, et d'une deuxième quantité fixe prédéterminée entre la position intermédiaire et la position de réception dans laquelle le dispositif de préhension se trouve près de la carcasse, par exemple retient la carcasse, ou inversement.

14. Système selon l'une des revendications 7 à 13, comprenant
un troisième transporteur (10) comprenant un mandrin (11a - 11c), et
un poste de transfert configuré pour faire passer la deuxième moitié de carcasse séparée du deuxième transporteur au troisième transporteur en insérant le mandrin dans la deuxième moitié de carcasse séparée lors du transport de la deuxième moitié de carcasse séparée par le deuxième transporteur, libérer la deuxième moitié de carcasse par le deuxième transporteur, et transporter plus loin la deuxième moitié de carcasse séparée sur le mandrin par le troisième transporteur, plus précisément à l'écart du deuxième transporteur.

15. Système selon l'une des revendications 7 à 14, agencé pour transporter la première moitié de carcasse séparée le long d'un ou plusieurs postes du système de traitement automatique où la première moitié de carcasse est traitée plus loin, plus précisément pour en prélever un ou plusieurs morceaux de volaille, et/ou agencé pour transporter la deuxième moitié de carcasse séparée le long d'un ou plusieurs postes du système de traitement automatique où la deuxième moitié de carcasse est traitée plus loin, plus précisément pour en prélever un ou plusieurs morceaux de volaille.
